Europäisches Patentamt

European Patent Office

Office européen des brevets

(11) Numéro de publication: **0 426 926 A1**

## (12) DEMANDE DE BREVET EUROPEEN

(21) Numéro de dépôt: 89460038.6

(22) Date de dépôt: 07.11.89

(51) Int. Cl.⁵: **C10B 53/00**, C10B 7/06, C10B 19/00

(43) Date de publication de la demande: **15.05.91 Bulletin 91/20**

(84) Etats contractants désignés: **AT BE CH DE ES FR GB GR IT LI LU NL SE**

(71) Demandeur: **RING OIL INVESTMENT N.V. 215C Schottegatweg Oost Willemstad Curacao(AN)**

(72) Inventeur: **Cornescu, Lucien Eugène 25, rue de Lubeck F-75116 Paris(FR)**

(74) Mandataire: **Le Guen, Louis François CABINET Louis LE GUEN 38, rue Levavasseur B.P. 91 F-35802 Dinard Cédex(FR)**

(54) Procédé, four et installation pour la destruction de déchets industriels.

(57) L'invention concerne un procédé et un four de destruction de déchets industriels, en particulier de déchets industriels tels que des vieux pneus. Elle concerne également une installation de destruction de déchets industriels qui est équipée d'un tel four de destruction.

Le procédé de destruction de déchets industriels de l'invention consiste à enrober ces déchets d'une poudre contenant essentiellement un oxyde métallique, la proportion en masse de poudre enrobée étant comprise entre 2 % et 4 % de la masse totale de déchets, et à décomposer par pyrolyse dans un four à induction les déchets ainsi enrobés, cette réaction de pyrolyse étant effectuée sous un vide primaire.

Le four de l'invention est un four à pyrolyse comportant des bobines d'induction alternant dans le sens de la longueur du four avec des tuyères d'échappement pour les gaz de pyrolyse. Dans ce four, le noir de carbone formé est récupéré pour être conditionné.

L'installation de l'invention comprend un four tournant (51), une chambre de post-combustion (54) comportant au moins une torche à plasma (55), une unité de traitement (57 à 61) et une chambre de stockage (56) pour les produits vitrifiés.

FIG. 6

EP 0 426 926 A1

# PROCÉDÉ, FOUR ET INSTALLATION POUR LA DESTRUCTION DE DÉCHETS INDUSTRIELS.

L'invention concerne un procédé et un four de destruction de déchets industriels, en particulier de déchets industriels tels que des vieux pneus. Elle concerne également une installation de destruction de déchets industriels qui est équipée d'un tel four de destruction.

Les déchets industriels représentent un volume de plus en plus important et leur stockage n'est pas possible, car il pose le problème de la pollution que créent ces déchets. On a donc été amené à prévoir des moyens pour leur destruction. Parmi ces déchets, certains présentent une remarquable stabilité chimique dont la conséquence la plus importante est qu'ils sont difficiles à détruire par des moyens classiques de combustion à la flamme. Par exemple, le caoutchouc des vieux pneus, du fait de la présence des liaisons polymèriques provenant de la vulcanisation par le soufre, brûlent, dans des fours classiques, à des vitesses extrêmement lentes.

En général, on résoud le problème de la destruction des déchets stables, tels que des vieux pneus, en utilisant des fours à pyrolise. Dans le document FR-A-2 610 078, par exemple, les déchets sont introduits dans un four à pyrolise constitué d'une colonne parcourue par un courant gazeux chaud engendré par des torches à plasma et soufflé à la base de ladite colonne. Les vieux pneus sont détruits par pyrolise et dégagent ainsi des gaz qui sont dirigés vers une unité de combustion où ils sont refroidis et traités.

Dans les fours à pyrolise, les déchets à détruire baignent dans un milieu gazeux dont la chaleur est apportée par des sources ponctuelles, telles que des torches à plasma. La température de ce milieu n'est donc pas homogène. Or, cela peut conduire à la formation de composés secondaires toxiques ou de composés secondaires indésirables par suite de la présence de l'oxygène et l'azote de l'air dans le four.

On connaît d'autres procédés de destruction de déchets industriels stables, tels que des vieux pneus. Ainsi, le document FR-A-2 474 650 décrit un procédé de destruction de vieux pneus dans lequel ils sont finement divisés en petites particules pour être soufflées sous pression élevée dans un four du type cyclone. Dans ce four, ils sont soumis à une combustion complète à une température élevée de l'ordre de 1200° C. Les produits d'échappement chauds sont purifiés dans un filtre et évacués par une cheminée.

On connaît également, par le document FR-A-2 556 078, un four pour la décomposition thermique de vieux pneus dans lequel ils sont brûlés dans un lit fluidisé présentant une température comprise entre 600 et 800° C. Les produits solides de cette décomposition sont recyclés pour alimenter le lit fluidisé. Les gaz dégagés sont évacués par une tuyère et envoyé à un foyer de combustion où ils sont brûlés.

Dans les fours décrits dans ces deux derniers documents, la température du milieu dans lequel baignent les pneus est homogène puisque ce milieu est soit agité, comme dans le four du type cyclone, soit présente une bonne conductibilité thermique, comme dans le four à lit fluidisé.

La destruction de vieux pneus engendrent généralement deux sortes de produits: des produits gazeux qu'il est nécessaire de traiter et de purifier avant de les évacuer à l'air libre et des produits non-gazeux que l'on peut récupérer et utiliser après traitement. Or, si les procédés décrits dans les documents mentionnés ci-dessus prévoient bien le traitement des gaz engendrés, ils ne prévoient pas de valoriser les déchets et de récupérer certains produits de réaction.

Le but de l'invention est donc de prévoir un procédé et un four pour la destruction de déchets industriels, en particulier de vieux pneus, dans lesquels les déchets sont chauffés de manière homogène et de manière qu'il n'y ait pas de dégagement de gaz toxiques, ce four permettant la récupération du noir de carbone formé lors de la pyrolise de ces déchets. Les produits de réaction qui ne peuvent être récupérés sont vitrifiés pour donner un produit non lixiviable ne présentant aucun risque pour l'environnement et ce, à long terme.

Un autre but de l'invention est de prévoir un four de destruction de vieux pneus qui peut équiper une installation de destruction de déchets industriels optimisée techniquement et économiquement.

A cet effet, l'invention concerne un procédé de destruction de déchets tels que des vieux pneus dont la caractéristique est qu'il consiste à enrober ces déchets d'une poudre contenant essentiellement un oxyde métallique, la proportion en masse de poudre enrobée étant comprise entre 2% et 4% de la masse totale de déchets, et à décomposer les déchets ainsi enrobés dans un four à induction par pyrolise, cette réaction étant faite sous un vide primaire.

Selon une caractéristique de l'invention, la poudre d'enrobage est constitué d'oxyde de zinc pour au moins 75% de sa masse.

Selon une autre caractéristique de l'invention, la poudre d'enrobage est constituée d'un mélange contenant 75% en masse d'oxyde de zinc, 10% en masse d'argile vert, 9% en masse de noir de carbone, 5% en masse d'oxyde de titane et 1% en masse de gypse (CASO₄-2 H₂O).

Selon une autre caractéristique de l'invention, les produits volatiles engendrés lors de la pyrolise sont chauffés à haute température, les produits solides engendrés étant alors vitrifiés.

L'invention concerne également un four à pyrolise pour la destruction de déchets solides selon le procédé ci-dessus.

Selon une caractéristique, il est constitué d'un tube dans lequel est monté un transporteur à bande sans fin, ce tube étant muni dans le premier tiers de sa longueur d'un sas pour l'introduction des déchets sur le transporteur, dans le second tiers de sa longueur, alternativement dans le sens de la longeur, d'une part, de bobines d'induction montées sur la circonférence du tube et, d'autre part, de tuyères d'échappement débouchant à l'intérieur du tube, et dans le troisième tiers de sa longueur, d'un système de séparation du noir de carbone des déchets métalliques, le transporteur transportant les déchets reçus du sas vers la partie centrale du four où ils subissent une pyrolise sous l'effet des ondes électro-magnétiques émises par les bobines d'induction, cette réaction étant faite sous vide au moyen d'une pompe primaire qui aspirent les gaz engendrés par pyrolise pour les extraire par les tuyères.

L'invention concerne également une installation de destruction de déchets industriels comprenant un four à pyrolise tel que celui qui vient d'être décrit, un four tournant dont une entrée est reliée aux tuyères du four à induction et l'autre entrée à un sas pour l'introduction de déchets chimiques, la sortie du four tournant étant relié à l'entrée d'une chambre de post-combustion comportant au moins une torche à plasma, cette chambre étant reliée, d'une part, à une unité de traitement des gaz engendrés dans cette chambre et, d'autre part, à un chambre de stockage des produits vitrifiés issus de cette chambre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue en coupe du premier tiers en longueur du four de l'invention,

la Fig. 2 est une vue en coupe du second tiers en longueur du four de l'invention,

la Fig. 3 est une vue en coupe tranversale de la partie centrale du four de l'invention,

la Fig. 4 est une vue en coupe du troisième tiers de la longueur du four de l'invention,

la Fig. 5 est une vue en coupe transversale de la troisième partie du four de l'invention et,

la Fig. 6 est une vue schématique d'une installation de destruction de déchets industriels qui utilise un four selon l'invention.

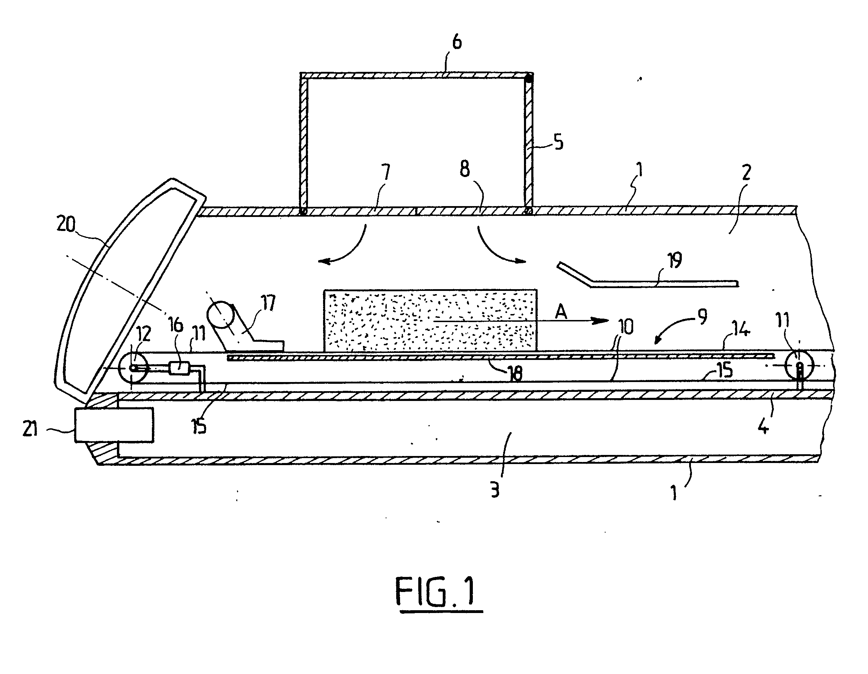

Un four à pyrolise pour la destruction de vieux pneus selon l'invention est essentiellement constitué d'un tube allongé 1 dont les Fig. 1, 2 et 4 représentent respectivement le premier tiers de la longueur, le second tiers et le troisième tiers. Le tube 1 a son intérieur divisé en une enceinte supérieure 2 et une enceinte inférieure 3 par une cloison horizontale 4. L'enceinte supérieure 2 présente un volume sensiblement supérieur au volume de l'enceinte inférieure 3.

Sur le tube 1, dans le premier tiers de sa longueur, est monté un sas 5 qui débouche dans la partie supérieure de l'enceinte 2 et qui est constitué d'une porte supérieure 6 et de deux portes inférieures 7, 8.

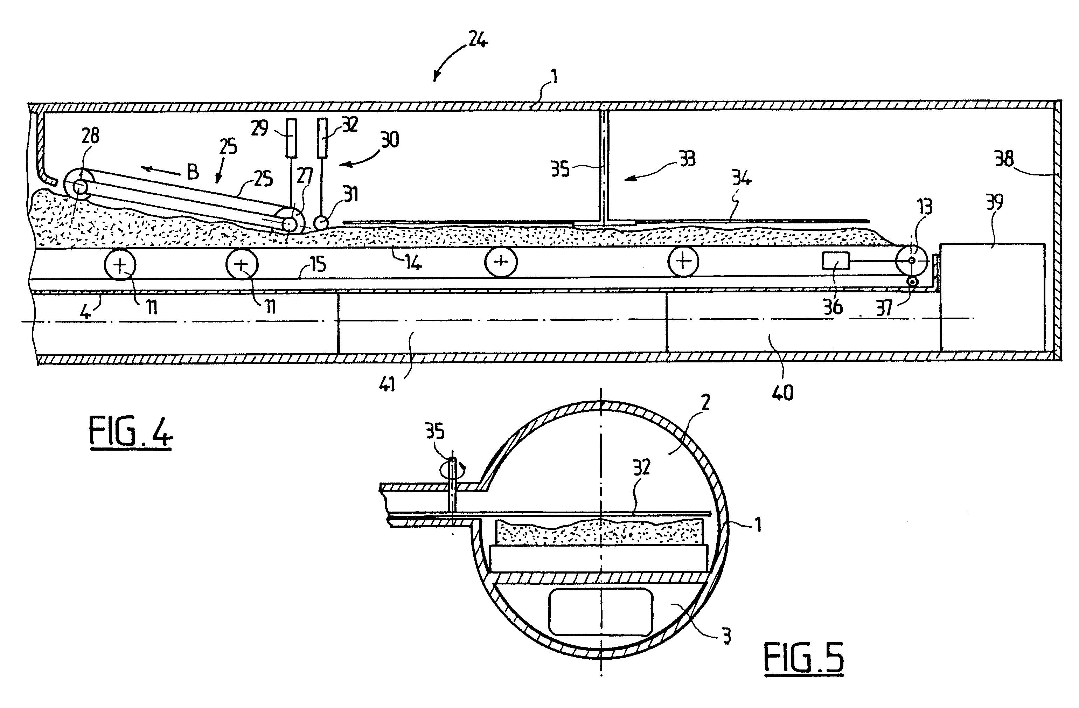

Sur la cloison 4, est monté un transporteur 9 muni d'une bande 10 mobile sur des rouleaux 11 répartis uniformément le long de la cloison 4. Un rouleau d'extrémité 12 est monté sur la cloison 4 de telle manière que la partie de la bande que lui et le premier rouleau 11 supportent soient en aplomb du sas 5. Un rouleau 13 est également monté sur la cloison 4 mais à l'autre extrémité de cette cloison (Fig. 4). Les rouleaux 12 et 13 retournent la bande 10 sur elle-même de manière à ce qu'elle forme une bande sans fin dont le brin supérieur 14 et le brin inférieur 15 sont parallèles au plan de la cloison 4. Le rouleau 12 est équipé d'un dispositif 16 reposant sur la cloison 4, la fonction de ce dispositif étant de maintenir une tension prédéterminée à toute la bande 10.

Dans le premier tiers de la longueur du tube 1, sous le sas 5, est monté un système vibratoire constitué d'un dispositif d'avance vibratoire 17 en liaison avec le brin 14 pour lui permettre d'être entraîné dans le sens de la flèche A sur la Fig. 1, le brin 15 se déplaçant dans l'autre sens. Ce système vibratoire comprend, en outre, sous le brin 14, une table vibratoire 18 à l'aplomb du sas 5 et un dispositif de compaction 19 en aval du sas 5 à une hauteur prédéterminée au dessus du brin 14 de la bande 10.

Côté sas, le tube 1 est fermé par une porte 20 qui obture la seule enceinte supérieure 2. L'enceinte inférieure 3 débouche, elle, à l'extérieur par une sortie 21.

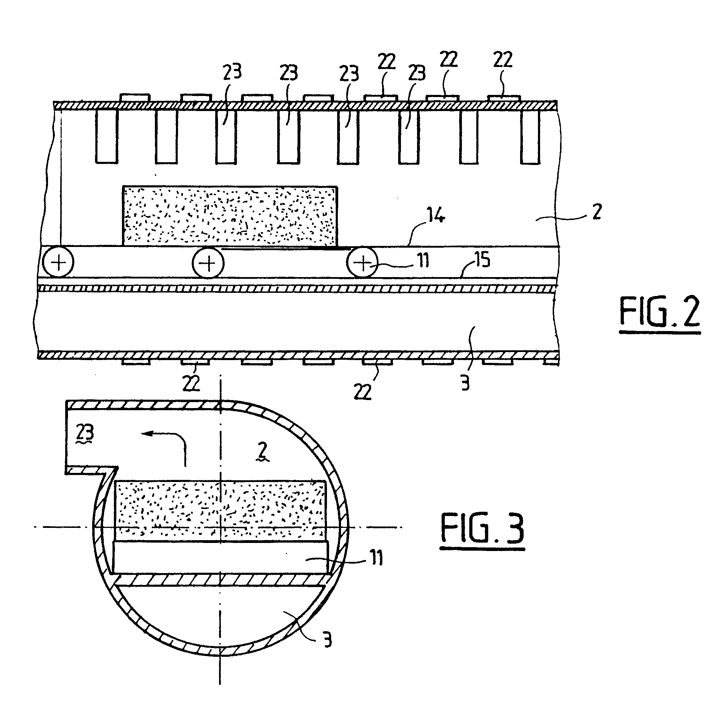

Dans la partie centrale du tube 1 (Fig. 2), sont prévus, alternativement dans le sens de la longueur du tube 1, d'une part, des bobines d'induction 22 montées sur la circonférence du tube 1 et, d'autre part, des tuyères d'échappement 23 débouchant dans l'enceinte supérieure 2. Comme le montre la Fig 3, ces tuyères sont, par exemple, montées de telle manière qu'elles débouchent horizontalement dans la partie supérieure de l'enceinte 2 vers l'arrière du tube 1. Les bobines 22 et les tuyères 23 sont disposées uniformément le long de la partie centrale du tube 1. Leur nombre est optimisé en fonction du volume de déchets traités par unité de temps, de la nature de ces déchets et de la vitesse d'avancement de la bande 10. Les tuyères 23 et, par conséquent l'enceinte 2, sont maintenues sous un vide primaire au moyen d'un moyen de pompe (non représenté) relié à la sortie des tuyères 23.

Au troisième tiers de la longueur du tube 1 (Fig. 4), est prévu un système de séparation du noir de carbone 24. Il comprend un séparateur métal/noir de carbone 25 constitué d'une bande 26 légèrement incl inée vers la bande 10 et tournant entre deux rouleaux 27, 28 dans le sens de la flèche B de la Fig. 4. Le rouleau 28 est prévu pour pivoter autour de l'axe de rotation de rouleau 27 sous l'action d'un dispositif 29 qui exerce une force prédéterminée sur le rouleau 28. Le système de séparation 24 comprend, en outre, un dispositif de régulation du granulage 30, monté à la sortie du séparateur 25 et consistant en un rouleau 31 soumis à une force verticale d'un dispositif 32. Le système 24 comprend enfin un carroussel électromagnétique 33 constitué d'un disque magnétique 34 tournant autour d'un axe vertical 35 situé légèrement en arrière de l'enceinte 2. Dans l'enceinte 2, le disque 34 se trouve à la sortie du dispositif 23 et surmonte la partie du brin 14 de la bande 10 supportée par les derniers rouleaux 11 et le rouleau 13, (Fig. 4). A l'arrière de l'enceinte 2, le disque 34 tourne dans une enceinte de stockage dont l'entrée 35 est seule représentée.

Le rouleau 13 est équipé d'un dispositif de pesée 36. En dessous du rouleau 13, en contact avec la bande 10, est prévu un rouleau de nettoyage 37.

Côté système de séparation 24, le tube 1 se prolonge au delà du rouleau 11 avant d'être fermé par par un bouchon 38. La cloison horizontale 4 est interrompue avant cette extrémité et est recourbée vers le haut jusqu'au niveau de la poulie 13. Dans l'espace formé entre l'extrémité de la cloison 4 et le bouchon 38, est prévu un dispositif de broyage 39.

A l'intérieur de l'enceinte inférieure 3 délimitée par la cloison 4, est montée une unité de traitement du noir de carbone. Son entrée se trouve à la sortie du dispositif de broyage 39 et sa sortie 21 à l'autre extrémité du tube 1. Elle consiste essentiellement en une unité d'aspiration-pulvérisation 40, une unité de filtrage 41, ces trois unités étant montées en série.

Le fonctionnement du four de l'invention est maintenant décrit. Bien qu'il puisse détruire des pneus entiers, on préfère y introduire des pneus déchiquetés car, comme on le comprendra par la suite, le rendement de destruction est meilleur. On pourrait également y introduire un mélange de pneus entiers et de pneus déchiquetés, le rendement baissant alors selon la proportion de pneus entiers. Avant l'introduction dans le four, les pneus sont enrobés d'une poudre dont une compositon type est:

oxyde de zinc: 75 % en masse

argile vert 10 %

noir de carbone 9 %

oxyde de titane 5 % et

gypse ($CaSO_4$-$2H_2O$) 1 %.

La proportion en masse de poudre enrobée est avantageusement comprise entre 2 et 4% de la masse totale des pneus à brûler. L'enrobage est réalisé de telle manière à ce que la poudre soit répartie uniformément sur la surface des pneus et des morceaux de pneus à brûler.

Au lieu d'un enrobage avec une poudre telle que celle que l'on vient de décrire, les pneus peuvent être traités par trempage dans une solution contenant de l'oxyde de fer, de magnésium, de calcium, de sodium ou de potasium.

Après traitement, les pneus sont introduits, au moyen d'une trémie (non représentée) ou tout autre dispositif similaire, dans le sas 5 de l'unité de destruction. Le sas 5 permet l'introduction par lot sans casser le vide présent dans l'enceinte 2. Il est rempli, mis sous vide et les pneus sont vidés progressivement dans l'enceinte supérieure 2 où ils sont répartis de façon uniforme sur le brin 14 de la bande 10. Les dispositifs vibratoires, tels que la table vibratoire 14 et le dispositif de compaction 15 améliorent encore cette répartition uniforme, tant en largeur qu'en hauteur. Le dispositif de compaction 15 rend de plus l'ensemble transporté relativement dense. Le dispositif 17 permet au brin 14 d'avancer dans le sens de la flèche A à vitesse sensiblement constante, entraînant les morceaux de pneus à cette vitesse vers la partie centrale de l'unité.

Là, sous l'effet du champ électromagnétique engendré par les bobines 22, les morceaux de la carcasse métallique des pneus, ainsi que la poudre de l'enrobage, sont soumis à des courants électriques qui engendrent, dans le volume des pneus et des morceaux de pneus, une chaleur suffisante pour qu'ils se décomposent par pyrolise. Cette réaction est réalisée sous vide, ce qui évite la production de composés hautement inflammables généralement obtenus, dans des fours à pyrolise classiques, par réaction des produits de combustion avec l'oxygène et l'azote de l'air. La fréquence des ondes électromagnétiques émis par les bobines 22 est ajustée en fonction du volume de l'enceinte 2 et de son remplissage. Le chauffage obtenu est progressif dans le sens d'avancement de la bande 10 et varie d'environ 150° C au niveau de la première bobine 22 jusqu 'à environ 450° C au niveau de la dernière. La vitesse d'avancement de la bande 10 est telle que l'ensemble des déchets soit décomposé après le passage sous la dernière bobine 22. Les produits volatiles sont pompés et extraits par les tuyères 23. Ils sont traités par une unité de traitement des gaz, qui sera décrite ci-dessous.

A la sortie de la partie centrale, les pneus sont complètement décomposés et il ne reste plus sur le brin 14 de la bande 10 que les produits non-volatiles, c'est-à-dire essentiellement du noir de carbone et les morceaux métalliques issus de la carcasse des pneus. Les particules de carbone sont détachées des résidus métalliques au moyen du système de séparation 24, la séparation proprement dite étant effectuée par le séparateur 25. A sa sortie, le carbone se présente sous la forme de granules dont la grosseur est déterminée par la pression qu'exerce le dispositif 29 sur le rouleau 28 du séparateur 25. La grosseur des granules est homogénéisée par le dispositif de régulation 30.

A la sortie du système de séparation 24, les résidus métalliques attirés magnétiquement sur le carroussel électromagnétique 23 et sont entraînés hors de l'enceinte 2.

Au bout du brin 14 de la bande 10, le noir de carbone, seul restant, est pesé par le dispositif de pesée 36 et est entraîné, par dépression, dans le broyeur 39. Cette dépression est créée par l'unité d'aspiration-pulvérisation 40. A la sortie de celui-ci, les particules de carbone sont pulvérisées afin de pouvoir être séparées, dans l'unité de filtrage 41, des résidus non-métalliques qui peuvent subsister. Elles sont ensuite récupérées à la sortie 21 pour être conditionnées.

Les avantages que procurent l'invention tiennent essentiellement à l'utilisation de chauffage par induction pour effectuer la pyrolise. En effet, ce chauffage se fait de façon homogène dans la masse par suite de la présence d'éléments métalliques provenant de la carcasse des pneus et des atomes métalliques amenés par le processus d'enrobage. Eventuellement, on peut augmenter le rendement de chauffage en ajouter des billes d'acier lors de l'enrobage. Le chauffage dans la masse évite toute carbonisation superficielle.

Par ailleurs, la succession des bobines de chauffage 22 et des tuyères 23 procure un autre avantage du fait qu'il est possible d'évacuer et de traiter les produits volatiles dès leur formation.

Un autre avantage du four de l'invention résulte du fait que la réaction de décomposition est faite sous vide. En effet, les composés gazeux présents dans la masse solide des pneus peuvent, sous l'effet du vide environnant, diffuser dans cette masse et en être ensuite extraits.

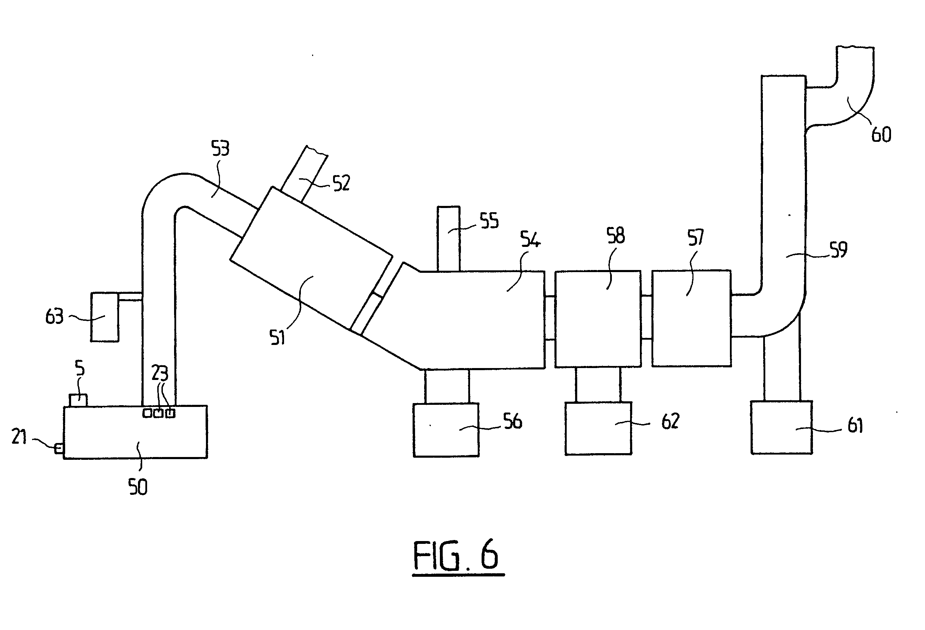

On va maintenant décrire, en relation avec la Fig. 6, une installation complète de destruction de déchets équipée d'un four à pyrolise selon l'invention. Elle comprend, outre le four à pyrolise 50 représenté avec son sas 5, sa sortie 21 et ses tuyères 23, un four tournant 51 pourvu d'un sas 52 et d'une canalisation 53 le reliant aux tuyères 23. A la sortie du four tournant 51, on trouve une chambre de post-combustion 54 équipée d'au moins une torche à plasma 55 et reliée, d'une part, à une chambre de stockage 56 et, d'autre part, a un filtre électrostatique 57 via un échangeur thermique 58. Le filtre électrostatique est suivi par une tour de lavage 59 reliée, à sa partie supérieure, à une cheminée 60 et, à sa partie inférieure, à un sécheur 61.

L'échangeur thermique 58 est par exemple constitué de tubes dans lesquels circule de l'eau froide et à l'extérieur desquels passent les gaz à refroidir. Il est relié à un groupe turbine-alternateur 62.

La tour de lavage 59 peut être constituée d'une tour au sommet de laquelle des jets envoient vers le pied de la tour de l'eau mélangée à de la soude.

Le four à pyrolise 50 fonctionnant sous vide une pompe primaire 63 est prévue sur la canalisation 53.

En fonctionnement normal, l'installation de destruction de déchets reçoit par le sas 5 du four les déchets solides à détruire, tels que des vieux pneus. Ceux-ci sont au préalable enrobés comme il a été décrit précédemment. Ils sont ensuite soumis dans le four 50 à une décomposition par pyrolise sous vide. La sortie 21 du four 50 fournit alors du noir de carbone et, par les tuyères 23, sont extraits au moyen de la pompe 63, les gaz dégagés lors de la pyrolise. Ces gaz alimentent alors, via la canalisation 53, le four tournant 51. Celui-ci reçoit, par le sas 52, des déchets chimiques qui peuvent provenir, par exemple, de déchets stockés dans des fûts du type pétrolier broyés avant leur introduction. Ces déchets chimiques et les gaz reçus du four 50 alimentent des brûleurs. Les résidus solides provenant de cette combustion sont recueillis dans la chambre de pré-combustion 54 où la torche à plasma 55 assure leur fusion complète. La torche à plasma sert également à détruire des déchets, tels que le fréon, qui sont injectés aussi pas le sas 52. Ils sont alors récupérés, sous forme vitrifiée, dans le bac de stockage 56. La chambre de post-combustion 54 assure aussi une nouvelle combustion des gaz provenant du four 51, ceux-ci étant ensuite recueillis par l'échangeur 58. Dans celui-ci, leur température est abaissée de 1500° C à 400° C en communiquant leur chaleur à l'eau qui y circule. Celle-ci est alors transformée en vapeur qui est ensuite recupérée par le goupe turbine-alternateur 62 pour produire du courant électrique. Les gaz refroidis sont ensuite traités dans le filtre 57 où ils sont débarrassés de leurs poussières avant d'être fournis à la tour de lavage. Là, ils sont débarrassés des molécules acides qu'ils contiennent, ces molécules étant neutralisées par la soude de la tour et transformées en sels qui se déposent dans le sécheur 61. Les gaz ainsi traités sont rejetés par la cheminée 60 et les sels recueillis dans le sécheur sont séchés et stockés. Le sécheur 61 est, par exemple, un dispositif de soufflage d'air chauffé par une au moins résistance électrique et son alimentation en courant est réalisée par le groupe turbine-alternateur 62.

Les avantages d'une telle installation tiennent à ce que les produits de la décomposition par pyrolise sont brûlés dans un four où ils sont mélangés à des déchets, les produits de cette combustion étant brûlés à très haute température pour obtenir enfin des produits vitrifiés. Ces produits sont parfaitement stables chimiquement et peuvent être stockés sans crainte pour l'environnement.

## Revendications

1) Procédé de destruction de déchets industriels tels que des vieux pneus, caractérisé en ce qu'il consiste à enrober ces déchets d'une poudre contenant essentiellement un oxyde métallique, la proportion en masse de poudre enrobée étant comprise entre 2 % et 4 % de la masse totale de déchets, et à décomposer par pyrolise dans un four à induction les déchets ainsi enrobés, cette réaction de pyrolise étant effectuée sous un vide primaire.

2) Procédé selon la revendication 1, caractérisé en ce que la poudre d'enrobage est constitué d'oxyde de zinc pour au moins 75 % de sa masse.

3) Procédé selon la revendication 2, caractérisé en ce que la poudre d'enrobage est constituée d'un mélange contenant 75 % en masse d'oxyde de zinc, 10 % en masse d'argile vert, 9 % en masse de noir de carbone, 5 % en masse d'oxyde de titane et 1 % en masse de gypse ($CASO_4$-$2 H_2O$).

4) Procédé selon l'une des revendications 1 à 3, caractérisé en ce que les produits volatiles engendrés lors de la pyrolise sont chauffés à haute température par une torche à plasma, les produits solides engendrés étant alors vitrifiés.

5) Four à pyrolise pour la destruction de déchets solides, tels que des vieux pneus, caractérisé en ce qu'il est constitué d'un tube (1) dans lequel est monté un transporteur (7) à bande sans fin (10), ce tube (1) étant muni dans le premier tiers de sa longueur d'un sas (5) pour l'introduction des déchets sur le transporteur (7), dans le second tiers de sa longueur, alternativement dans le sens de la longueur, d'une part, de bobines d'induction (22) montées sur la circonférence du tube (1) et, d'autre part, de tuyères d'échappement (23) débouchant à l'intérieur du tube (1), et dans le troisième tiers de sa longueur, d'un système de séparation (24) pour séparer le noir de carbone des déchets métalliques, le transporteur (7) transportant les déchets reçus du sas (5) vers la partie centrale du four où ils subissent une pyrolise sous l'effet des ondes électro-magnétiques émis par les bobines d'induction (22), cette réaction étant réalisée sous vide, les gaz engendrés étant extraits par les tuyères (23).

6) Procédé de destruction de déchets industriels tels que des vieux pneus selon l'une des revendications 1 à 4, caractérisé en ce qu'on utilise pour sa mise en oeuvre un four à pyrolise selon la revendication 5.

7) Installation de destruction de déchets industriels comprenant un four à pyrolise selon la revendication 5, caractérisé en ce qu'elle comprend en outre un four tournant (51) dont une entrée est reliée aux tuyères (23) du four à induction (50) et l'autre entrée à un sas (52) pour l'introduction de déchets chimiques, la sortie du four tournant (51) étant relié à l'entrée d'une chambre de post-combustion (54) comportant au moins une torche à plasma (55), cette chambre (54) étant reliée, d'une part, à une unité de traitement (57 à 61) servant à purifier les gaz engendrés dans la chambre (54) et, d'autre part, à une chambre (56) pour le stockage des produits vitrifiés issus de la chambre (54).

8) Installation selon la revendication 7, caractérisée en ce que l'unité de traitement comprend un échangeur thermique (58) servant à abaisser la température des gaz issus de la chambre (54), un filtre électrostatique (57) pour débarrasser lesdits gaz des poussières qu'ils peuvent contenir, une tour de lavage (59) dans lequel les gaz issus du filtre (57) sont en contact de jets d'eau additionnée de soude pour transformer les molécules acides en des molécules de sels, une cheminée (60) pour rejeter les gaz traités dans la tour (59) et un sécheur (61) pour récupérer les sels formés dans la tour (59) et les sécher.

FIG.1

FIG.2

FIG.3

EP 0 426 926 A1

FIG.4

FIG.5

EP 0 426 926 A1

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 984 288  (MASAAKI YOSHIDA et al.)<br>* Revendications 1,2,11,12; colonne 2, lignes 32-35; colonne 4, lignes 48-54; colonne 8, lignes 25-58; figures 1-3 *<br>--- | 1,5,6 | C 10 B  53/00<br>C 10 B   7/06<br>C 10 B  19/00 |
| Y | US-A-3 843 457  (GRANNEN et al.)<br>* Revendications 1-9; fig. *<br>--- | 1,5,6 | |
| A | GB-A-2 152 949  (PYROLYSIS SYSTEMS)<br>* Revendications 1-34; figure 1 *<br>----- | 4,7,8 | |

**DOMAINES TECHNIQUES RECHERCHES (Int. Cl.5)**

C 10 B

*Le présent rapport a été établi pour toutes les revendications*

| Lieu de la recherche | Date d'achèvement de la recherche | Examinateur |
|---|---|---|
| LA HAYE | 09-07-1990 | MEERTENS J. |